# EUROPÄISCHE PATENTSCHRIFT

(11) **EP 0 714 596 B1**
(45) Veröffentlichungstag und Bekanntmachung des Hinweises auf die Patenterteilung: **21.01.1998**
(21) Anmeldenummer: 94118598.5
(22) Anmeldetag: 25.11.1994
(51) Int. Cl.: A01K 5/02

(54) **Fütterungseinrichtung für Viehfuttermischungen**
Feeding device for the distribution of animal feed mixtures
Installation d'alimentation pour la distribution de mélanges d'affouragement

(43) Veröffentlichungstag der Anmeldung: 05.06.1996
(73) Patentinhaber: WEDA-DAMMANN & WESTERKAMP GmbH, 49424 Lutten (DE)
(72) Erfinder: Fahlbusch, Klaus, D-49377 Vechta i.Old. (DE)
(74) Vertreter: Busse & Busse Patentanwälte

(56) Entgegenhaltungen:
- EP-A- 0 373 147
- DE-A- 3 637 408
- Zeichnung "WEDA Doppelrohranlage", Weda GmbH

## Beschreibung

Die Erfindung bezieht sich auf eine Fütterungseinrichtung zum Aufbereiten und Zuführen von pumpfähigen Viehfuttermischungen und von Medikamentenlösungen zu Verbraucherstellen in einer Ausbildung gemäß dem Oberbegriff des Anspruchs 1.

Bei einer bekannten, 1992 an einen Abnehmer in den Niederlanden gelieferten Fütterungseinrichtung dieser Art sind an jeder Verbraucherstelle die Ringförderleitung für Futter und die Ringförderleitung für die Medikamentenlösung mit je einem gesonderten Auslaßventil versehen.

Es ist ferner eine Fütterungseinrichtung bekannt (EP-A-0 373 147), die einen ersten, mit Trockenfutterbestandteilen beschickbaren Anmischbehälter mit Rührwerk und Wegevorrichtung umfaßt, der an eine erste Ringförderleitung angeschlossen ist. Die Fütterungseinrichtung umfaßt ferner eine Förderleitung für flüssige Bestandteile der an Verbraucherstellen abzugebenden Futtermischung, in die Medikamentenbestandteile einspeisbar sind. Die Förderleitung für flüssige Bestandteile ist an jeder Verbraucherstelle an einen Mischbehälter angeschlossen, der zugleich aus der Ringförderleitung für Trockenfutterbestandteile mit Trockenfutter beschickbar ist. Die Bildung einer fertigen Futtermischung erfolgt in dem jeweils der Verbraucherstelle zugeordneten Mischbehälter, wobei die Fütterungseinrichtung durch ein Zentralsteuergerät gesteuert ist.

Die Erfindung befaßt sich mit dem Problem einer baulich einfachen Medikamentenversorgung von Verbraucherstellen und einer möglichst gleichmäßig verteilten Einbringung der Medikamentenlösung im abzugebenden Futter.

Die Erfindung löst das Problem durch eine Fütterungseinrichtung mit den Merkmalen des Anspruchs 1. Hinsichtlich wesentlicher weiterer Ausgestaltungen wird auf die Ansprüche 2 bis 11 verwiesen.

Die erfindungsgemäße Fütterungseinrichtung ermöglicht eine gemeinschaftliche Steuerung der Abgabe von Futter und von Medikamentenlösungen an einer Verbraucherstelle durch das Futterauslaßventil mit der Folge, daß nicht nur gesonderte Auslaßventile in der Ringleitung für die Medikamentenlösung samt Antrieben und Steuermitteln eingespart werden, sondern auch eine besonders gute Durchmischung von Futter und Medikamentenlösung bei deren Abgabe erzielt werden kann. Zugleich ist eine unerwünschte Medikamentenverschleppung vermieden.

Weitere Einzelheiten und Vorteile ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: ein Fließschema einer Fütterungseinrichtung nach der Erfindung,
- Fig. 2: einen Schnitt durch die Ringleitungen und ein diesen im Bereich einer Verbraucherstelle gemeinsames Auslaßventil, und
- Fig. 3: einen Teilschnitt ähnlich Fig. 2 durch eine zweite Ausführung des Auslaßventils.

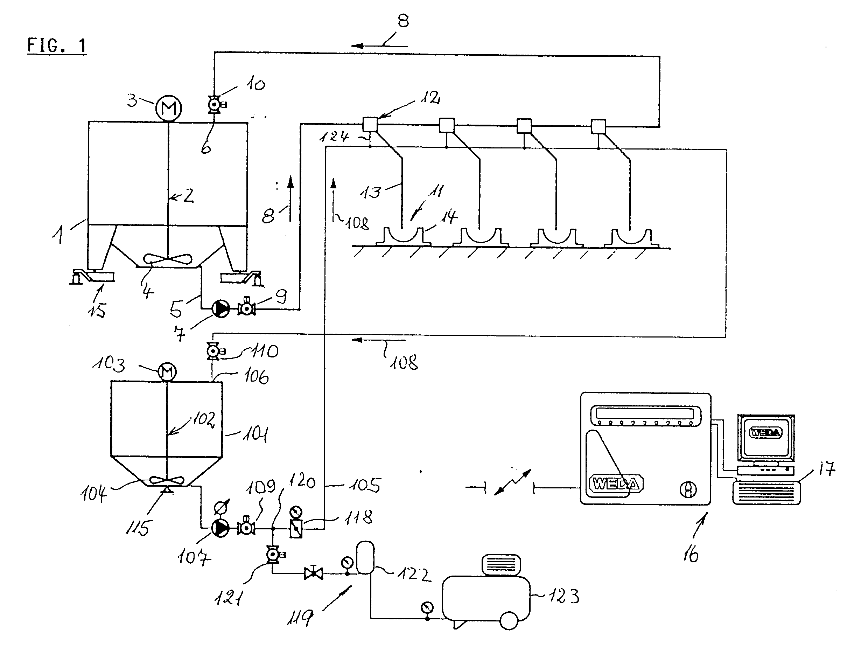

Wie der Fig. 1 entnommen werden kann, umfaßt die Fütterungseinrichtung einen ersten Anmischbehälter 1, der mit Futterbestandteilen aus Vorratsbehältern beschickbar ist und ein Rührwerk 2 mit Antrieb 3 und Rührflügel 4 aufweist, der nahe dem Boden des Anmischbehälters 1 umläuft. Aus dem Anmischbehälter 1 mündet im Bereich des tiefsten Punktes seines Innenraums eine Ringförderleitung 5 aus, die bei 6 wieder in den Anmischbehälter einmündet. Diese Ringförderleitung 5 ist nahe dem Anmischbehälter 1 mit einer Förderpumpe 7 versehen, die nach Fertigstellung einer Viehfuttercharge Futter aus dem Anmischbehälter 1 in Richtung der Pfeile 8 durch die Ringförderleitung 5 fördert. Stromab der Förderpumpe 7 ist dicht hinter dieser ein Vorlaufventil 9 in der Ringförderleitung 5 angeordnet, und nahe der Einmündung der Ringförderleitung 5 in den Anmischbehälter 1 ist in der Ringförderleitung ferner ein Rücklaufventil 10 vorgesehen.

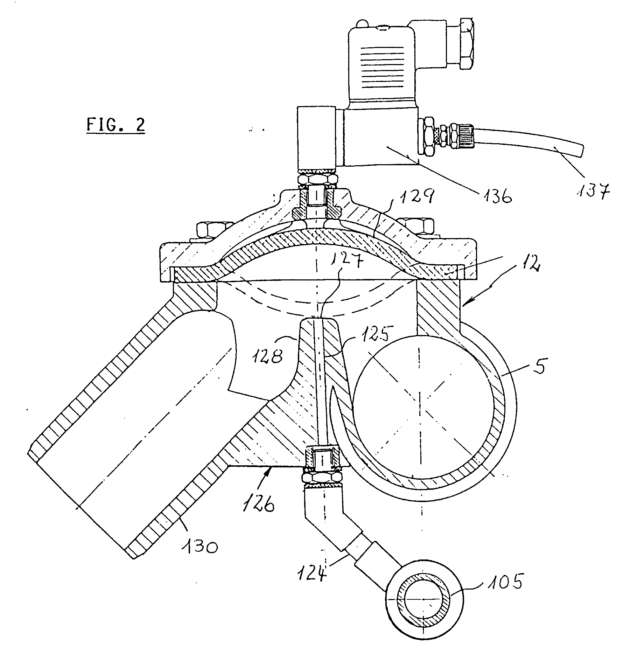

An jeder der von der Ringförderleitung 5 passierten Verbraucherstellen 11, von denen vier dargestellt sind, jedoch eine beliebig wählbare Anzahl vorgesehen sein kann, ist in der Ringförderleitung 5 ein Auslaßventil 12 vorgesehen, das in Fig. 2 näher veranschaulicht ist. Das Auslaßventil 12 mündet in ein Fallrohr 13 und dieses beispielsweise in einen Trog 14.

Dem Anmischbehälter 1 ist eine Wiegevorrichtung 15, beispielsweise in Gestalt von Druckmeßdosen oder Dehnungsmeßstreifen, zugeordnet, mittels der das Gewicht des Anmischbehälters 1 ständig erfaßt werden kann. Die Meßwerte dieser Wiegevorrichtung 15 werden einem Zentralsteuergerät 16 zugeführt, durch das sämtliche Funktionen der Fütterungseinrichtung nach einem von einem Computer 17 vorgebbaren Programm steuerbar sind. Insbesondere steuert das Zentralsteuergerät 16 die Zufuhr der Futterbestandteile zum Anmischbehälter 1, das Rührwerk 2, die Förderpumpe 7 und die Ventile 9,10 und 12, die beispielsweise pneumatisch betätigbar sind.

Die Fütterungseinrichtung umfaßt weiterhin einen im Vergleich zum Futteranmischbehälter 1 wesentlich kleineren Anmischbehälter 101 für Medikamentenlösungen, der mit einer Wiegevorrichtung 115 versehen sein kann und jedenfalls mit einem Rührwerk 102 mit Antrieb 103 und Rührflügel 104 versehen ist. Auch aus diesem Anmischbehälter 101 mündet eine Ringförderleitung 105 aus, in der nahe der Ausmündung eine Förderpumpe 107, stromab der Förderpumpe 107 und nahe dieser ein Vorlaufventil 109 sowie nahe der Einmündung 106 der Ringleitung 105 in den Anmischbehälter 101 ein Rücklaufventil 110 angeordnet ist.

Der Anmischbehälter 101 ist mit Bestandteilen einer zuzubereitenden Medikamentenlösung aus Vorratsbehältern beschickbar, wobei die Dosierung der Bestandteile mit Hilfe der Wiegevorrichtung 115 und des Zentralsteuergerätes 16 vorgenommen werden kann, die auch den zweiten Teil der Fütterungseinrichtung in allen ihren Funktionen steuert. In Fällen jedoch, in denen die Bestandteile von Medikamentenlösungen, z.B. durch Dosierförderer, in vorgegebenen Mengen dem Anmischbehälter 105 zugeführt werden, kann gegebenenfalls auf eine Wiegevorrichtung 115 verzichtet werden, wenn als Förderpumpe 107 eine Dosierförderpumpe Verwendung findet, mit deren Hilfe die an den Verbraucherstellen 11 abzugebenden Teilmengen an Medikamentenlösung bestimmbar sind. Anstelle einer Dosierförderpumpe kann einer beliebig ausgeführten Förderpumpe 107 auch ein Durchlaufmengenmeßgerät 118 in der Ringleitung 105 nachgeordnet sein, mit deren und des Zentralsteuergerätes 16 Hilfe die Dosierung der Abgabemengen an Verbraucherstellen 11 erfolgen kann.

Eine schematisch dargestellte und als Ganzes mit 119 bezeichnete Druckluftquelle ist bei 120 an die Ringförderleitung 105 angeschlossen, und mittels eines Ventils 121 ist die Verbindung mit der Ringförderleitung 5 steuerbar. Mit 122 ist ein Ausgleichsbehälter und mit 123 ein Kompressor bezeichnet.

Die Ringförderleitung 105, die einen wesentlich geringeren freien Strömungsquerschnitt darbieten kann als die Ringförderleitung 5, ist an jeder Verbraucherstelle 11 an das dort in der Ringförderleitung 5 vorgesehene Auslaßventil 12 angeschlossen, dessen Ventilglied auf diese Weise nicht nur den Auslaß für Futter aus der Ringförderleitung 5, sondern auch den Auslaß für Medikamentenlösung aus der Ringförderleitung 105 freigibt bzw. absperrt. Wie insbesondere der Fig. 2 entnommen werden kann, ist die Ringförderleitung 105 über eine Zweigleitung 124 an eine Bohrung 125 im Ventilgehäuse 126 des Auslaßventils 12 angeschlossen, deren Austrittsöffnung 127 innerhalb der Ventilsitzfläche des Auslaßventils 12 mündet, die im Falle des dargestellten, bevorzugten Membranventils von der Oberseite des Dichtungssteges 128 gebildet ist. Die das Ventilglied bildende Membran 129, die in ausgezogenen Linien in Offenstellung und in gestrichelten Linien in Schließstellung veranschaulicht ist, verschließt dementsprechend nicht nur den Übergang von der Ringförderleitung 5 in den Auslaßstutzen 130, an den das Fallrohr 13 angeschlossen wird, sondern auch die Austrittsöffnung 127 der mit der Ringleitung 105 in Verbindung stehenden Bohrung 125.

Eine im Anmischbehälter 101 zubereitete Medikamentenlösung wird vom Förderdruckerzeuger 107 bedarfsweise durch die Ringleitung 105 in Richtung der Pfeile 108 gefördert, wobei jedoch eine Förderung von Medikamentenlösung in der Ringförderleitung 105 unabhängig von der Förderung von Futter in der Ringförderleitung 5 in der Weise steuerbar ist, daß die Förderung ein- und abschaltbar und vorzugsweise auch in der Förderleistung veränderbar ist. Vorteilhaft kann auch die Förderleistung der Förderpumpe 7 veränderbar sein, um eine Abstimmung der aus einem Auslaßventil 12 während dessen Offenstellung austretenden Förderströme an Futter und Medikamentenlösung zu ermöglichen.

Im Betrieb der Fütterungseinrichtung kann im Bedarfsfalle zusätzlich zur Zubereitung von Futtermischungen eine Zubereitung einer Medikamentenlösung vorgenommen werden, wenn der Gesundheitszustand von Tieren im Bereich einzelner Verbraucherstellen 11 dies erforderlich macht. Soll der Futterabgabemenge an einer Verbraucherstelle 11 wegen des Gesundheitszustandes der zu dieser Verbraucherstelle 11 zugeordneten Tiere mit einer vorgegebenen Menge an Medikamentenlösung versetzt werden, so wird unmittelbar bei oder nach dem Öffnen des entsprechenden Auslaßventils 12 der Förderdruckerzeuger 107 für die Ringförderleitung 105 eingeschaltet und dadurch eine Förderung von Medikamentenlösung aus der Ringförderleitung 105 über die Zweigleitung 124 und die Bohrung 125 in den Auslaßkanal des Auslaßventils 12 in Gang gesetzt, wobei die aus der Austrittsöffnung 127 austretende Medikamentenlösung unmittelbar in das von der Ringleitung 5 zum Auslaßstutzen 130 strömende Futter übertritt und sich mit diesem vermischt. Durch entsprechende Aktivierung der Ausförderung von Medikamentenlösung an einem vorbestimmten Auslaßventil 12 unmittelbar bei Beginn der Futterabgabe und durch Aufrechterhaltung der Ausförderung von Medikamentenlösung während des gesamten Futterabgabevorganges an diesem Auslaßventil 12 kann eine weitgehend gleichmäßige Vermischung von Futter und Medikamentenlösung sichergestelt werden, die gewährleistet, daß die Tiere mit der aufgenommenen Futtermenge auch einen dieser Futtermenge proportionalen Medikamentenanteil erhalten. Durch geeignete Druckabstimmung kann das Eintragen von Medikamentenlösung in das Futter mit einer Injektorwirkung einhergehen, die den Vermischungsgrad zusätzlich verbessert.

Bedarf es an einer Verbraucherstelle 11 keiner Abgabe von Medikamentenlösung, so wird die Förderung von Medikamentenlösung beim Öffnen des Auslaßventils 12 an dieser Verbraucherstelle 11 nicht aktiviert mit der Folge, daß lediglich Futter an dieser Verbraucherstelle 11 abgegeben wird. Auf diese einfache Weise kann die Abgabe von Medikamentenlösung auf jene Verbraucherstellen 11 beschränkt werden, an denen sie erwünscht ist.

Da die Medikamentenlösung im Auslaßventil 12 in dessen Auslaßbereich austritt und direkt in das Futter eingetragen wird, wird lediglich der Auslaßstutzen des Auslaßventils 12 und das gegebenenfalls mit diesem verbundene Fallrohr 13 mit Futter benetzt, das eine Medikamentenlösung enthält, so daß keinerlei Verschleppung von Medikamenten durch die futterführende Ringleitung 5 und damit zu Verbraucherstellen 11 entstehen kann, an denen eine Medikamentenbehandlung der zugehörigen Tiere nicht erforderlich ist.

Um zwischen den Mahlzeiten ein Absetzen von Schwer- oder Schwebestoffen aus der Medikamentenflüssigkeit zu vermeiden, wird nach dem Ende des Fütterungsvorganges aller Tiere das Rücklaufventil 110 bei geschlossenem Ventil 109 geöffnet und mittels Druckluft über das geöffnete Ventil 121 die gesamte Füllung der Ringförderleitung 105 in den Anmischbehälter 101 zurückgefördert.

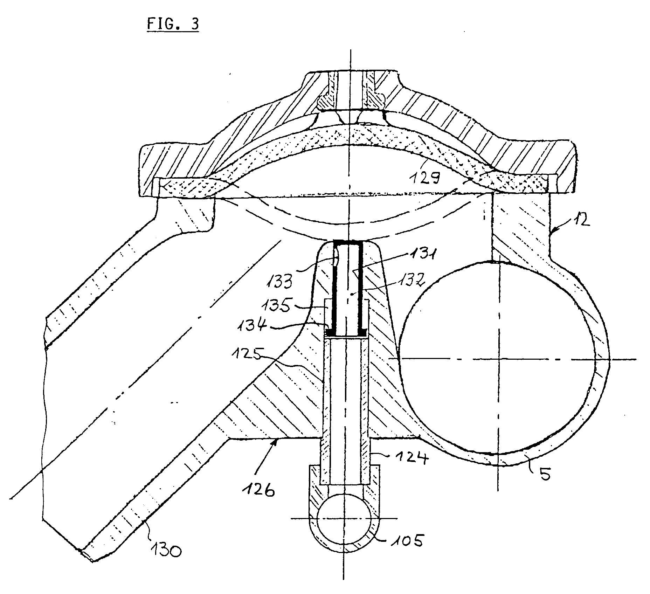

Um zu vermeiden, daß sich Futterbestandteile in der Bohrung 125 absetzen, wenn keine Medikamentenlösung bei einer Futterabgabe ausgefördert wird, kann im Austrittsbereich der Bohrung 125 ein etwa hutförmiger Kolben 131 vorgesehen sein, der nach Abheben der Membran 129 aus seiner in Fig. 3 veranschaulichten, versenkten Ausgangsstellung durch den Förderdruck in der Medikamentenlösung in eine Betriebsstellung verschiebbar ist, in der eine seitliche Auslaßöffnung 133 aus dem Durchflußkanal 132 im Abstand oberhalb der Oberseite des Dichtungssteges 128 gelegen und dem Auslaßstutzen 130 zugewandt ist. Dies sichert einen Austritt von Medikamentenlösung inmitten des Futterstroms.

Der untere Randbereich 134 des Kolbens ist in einer Erweiterung 135 der Bohrung 125 aufgenommen und bildet einen das Ausfahren des Kolbens 131 begrenzenden Anschlag. In der Erweiterung 135 kann auch eine Rückstellfeder vorgesehen werden, wenn nicht wie beim dargestellten Ausführungsbeispiel die Membran 129 eine Rückstellfunktion erfüllen kann, die im übrigen über ein Magnetventil 136 mit Druckluft aus einer Druckluftleitung 137 beaufschlagbar ist.

## Patentansprüche

1. Fütterungseinrichtung zum Aufbereiten und Zuführen von pumpfähigen Viehfuttermischungen und von Medikamentenlösungen zu Verbraucherstellen (11), mit einem ersten, mit Futterbestandteilen beschickbaren Anmischbehälter (1), der ein Rührwerk (2) und eine Wiegevorrichtung (15) umfaßt und an eine erste Ringförderleitung (5) angeschlossen ist, die mit einem Vorlauf-und einem Rücklaufventil (9,10) und einer Förderpumpe (7) versehen ist, und mit einem zweiten, mit Bestandteilen einer Medikamentenlösung beschickbaren Anmischbehälter (101), der mit einem Rührwerk (102) versehen und an eine zweite Ringförderleitung (105) angeschlossen ist, die ein Vorlauf- und ein Rücklaufventil (109,110) sowie eine Förderpumpe (107) umfaßt und zu den gleichen Verbraucherstellen (11) wie die Ringförderleitung (5) für Futter geführt ist, mit einem Auslaßventil (12) in der Ringförderleitung (5) für Futter an jeder Verbraucherstelle (11), und mit einem Zentralsteuergerät (16) zur selbsttätigen Gesamtsteuerung aller Funktionen der Fütterungseinrichtung nach einem vorgebbaren Programm, **dadurch gekennzeichnet**, daß an jeder Verbraucherstelle (11) die Ringförderleitung (105) für die Medikamentenlösung an das Auslaßventil (12) in der Ringförderleitung (5) für Futter angeschlossen und von diesem mitgesteuert ist, und die Förderung von Medikamentenlösung in ihrer Ringförderleitung (105) unabhängig von der Futterförderung ein-und abschaltbar ist.

2. Einrichtung nach Anspruch 1, **dadurch gekennzeichnet**, daß die Ringförderleitung (105) für die Medikamentenlösung jeweils durch eine Zweigleitung (124) an einen Kanal (125) im Ventilgehäuse (126) des Auslaßventils (12) angeschlossen ist, dessen Austrittsöffnung (127) innerhalb der Ventilsitzfläche des Auslaßventils (12) mündet.

3. Einrichtung nach Anspruch 2, **dadurch gekennzeichnet**, daß als Kanal eine Bohrung (125) im Dichtungssteg (128) des als Membranventil ausgebildeten Auslaßventils (12) vorgesehen ist und im Membransitzbereich an der Oberseite des Dichtungssteges (128) ausmündet.

4. Einrichtung nach einem der Ansprüche 1 bis 3, **dadurch gekennzeichnet**, daß der Anmischbehälter (101) für die Medikamentenlösung mit einer Wiegevorrichtung (115) versehen und als Förderdruckerzeuger in der Ringleitung (105) eine Förderpumpe (107) vorgesehen ist.

5. Einrichtung nach einem der Ansprüche 1 bis 4, **dadurch gekennzeichnet**, daß zur Förderung der Medikamentenlösung in ihrer Ringleitung (105) eine Dosierförderpumpe vorgesehen ist.

6. Einrichtung nach einem der Ansprüche 1 bis 5, **dadurch gekennzeichnet**, daß die Förderpumpen (7;107) in beiden Ringleitungen (5;105) unabhängig voneinander in der Förderleistung steuerbar sind.

7. Einrichtung nach einem der Ansprüche 2 bis 6, **dadurch gekennzeichnet**, daß im Mündungsbereich des Kanals bzw. der Bohrung (125) im Ventilgehäuse (126) ein die Austrittsöffnng (127) verschließender Kolben (131) vorgesehen ist, der durch den Förderdruck in der Medikamentenlösung aus seiner versenkten Ausgangsstellung in eine über die Austrittsöffnung (127) vorstehende Betriebsstellung verschiebbar ist und einen Durchflußkanal (132) für Medikamentenlösung mit seitlicher Auslaßöffnung (133) aufweist.

8. Einrichtung nach Anspruch 7, **dadurch gekennzeichnet**, daß der Kolben (131) eine hutförmige Grundform aufweist und der untere Rand (134) in einem Erweiterungsbereich (135) des Kanals bzw. der Bohrung (125) als Anschlagschulter geführt ist.

9. Einrichtung nach Anspruch 7 oder 8, **dadurch gekennzeichnet**, daß die seitliche Auslaßöffnung (133) des Kolbens (131) zum Auslaßstutzen (130) des Ventilgehäuses (126) hin gerichtet ist.

10. Einrichtung nach einem der Ansprüche 7 bis 9, **dadurch gekennzeichnet**, daß die Auslaßöffnung (133) des Kolbens (131) in dessen Betriebsstellung im Abstand oberhalb der Ventilsitzfläche gelegen ist.

11. Einrichtung nach einem der Ansprüche 7 bis 10, **dadurch gekennzeichnet**, daß der Kolben (131) durch eine Rückstellfeder in Richtung seiner Ausgangsstellung vorbelastet ist.

## Claims

1. A feeding apparatus for processing and supplying pumpable cattle feed mixtures and medicinal solutions to consumer stations (11) with a first conditioning tank (1) which can be charged with feed constituents and which comprises an agitating mechanism (2) and a weighing device (15) and which is connected to a first ring delivery pipe (5) which is provided with a feed and return valve (9, 10) and a delivery pump (7), and with a second conditioning tank (101) which can be charged with a medicinal solution and which is fitted with an agitating mechanism (102) and is connected to a second ring delivery pipe (105) comprising a feed and a return valve (109, 110) as well as a delivery pump (107) and which extends to the same consumer station (11) as the ring delivery pipe (5) for feed, with an outlet valve (12) in the ring delivery pipe (5) for feed at each consumer station (11) and with a central control unit (16) for automatic overall control of all functions of the feed apparatus in accordance with a predeterminable programme, characterised in that at each consumer station (11) the ring delivery pipe (105) for medicinal solution is connected to the outlet valve (12) in the ring delivery pipe (5) for feed and is controlled jointly by this latter, the delivery of medicinal solution in its ring delivery pipe (105) being adapted to be switched on and off independently of the feed delivery.

2. An apparatus according to claim 1, characterised in that the ring delivery pipe (105) for the medicinal solution is respectively connected by a branch pipe (124) to a passage (125) in the valve body (126) of the outlet valve (12), of which the outlet orifice (127) opens into the valve seat surface of the outlet valve (12).

3. An apparatus according to claim 2, characterised in that as the passage a bore (125) in the sealing web (128) of the outlet valve (12), which is constructed as a diaphragm valve, is provided and, in the area of the diaphragm seat, opens out on the top of the sealing web (128).

4. An apparatus according to one of claims 1 to 3, characterised in that the conditioning tank (101) for the medicinal solution is provided with a weighing device (115) and in that a delivery pump (107) is provided as a delivery pressure generator in the ring pipe (105).

5. An apparatus according to one of claims 1 to 4, characterised in that a dispensing delivery pump is provided in the ring pipe (105) for delivering the medicinal solution.

6. An apparatus according to one of claims 1 to 5, characterised in that the delivery pumps (7;107) in both ring pipes (1;105) can be controlled independently of each other in terms of delivery rate.

7. An apparatus according to one of claims 2 to 6, characterised in that in the region of the mouth of the passage or bore (125) in the valve body (126) there is a piston (131) which occludes the outlet orifice (127) and which can be displaced by the delivery pressure in the medicinal solution out of its lowered starting position and into an operating position in which it protrudes beyond the outlet orifice (127) and comprises a throughflow passage (132) for medicinal solution with a lateral outlet orifice (133).

8. An apparatus according to claim 7, characterised in that the piston (131) has a basic hat-like shape, the bottom edge (134) being guided in a widening-out region (135) of the passage or bore (125) to serve as an abutment shoulder.

9. An apparatus according to claim 7 or 8, characterised in that the lateral outlet orifice (133) of the piston (131) is directed towards the outlet connector (130) of the valve body (126).

10. An apparatus according to one of claims 7 to 9, characterised in that the outlet orifice (133) of the piston (131), when this is in its operating position, is situated at a distance above the surface of the valve seat.

11. An apparatus according to one of claims 7 to 10, characterised in that the piston (131) is biased in the direction of its starting position by a restoring spring.

## Revendications

1. Installation d'alimentation de bétail pour la préparation et la distribution dans des lieux de consommation (11) de mélanges d'aliments pour bétail et de solutions médicamenteuses aptes à être pompés, comportant un premier réservoir de mélange (1) pouvant être alimenté des composants d'aliments pour bétail, qui comprend un agitateur (2) et un dispositif de pesage (15) et est raccordé à une première conduite d'alimentation circulaire (5) pourvue d'une vanne d'entrée et d'une vanne de retour (9, 10) ainsi que d'une pompe d'alimentation (7), et un deuxième réservoir de mélange (101) pouvant être alimenté des composants d'une solution médicamenteuse, qui comprend un agitateur (102) et est raccordé à une deuxième conduite d'alimentation circulaire (105) pourvue d'une vanne d'entrée et d'une vanne de retour (109, 110) ainsi que d'une pompe d'alimentation (107) et conduisant aux mêmes lieux de consommation (11) que la conduite d'alimentation circulaire (5) destinée aux aliments, une valve de décharge (12) dans la conduite d'alimentation circulaire (5) destinée aux aliments, au niveau de chaque lieu de consommation (11) et une unité de commande centrale (16) destinée à la commande automatique globale de toutes les fonctions de l'installation d'alimentation de bétail suivant un programme prédéterminé, caractérisée en ce que, à chaque lieu de consommation (11), la conduite d'alimentation circulaire (105) destinée à la solution médicamenteuse est raccordée à la valve de décharge (12) dans la conduite d'alimentation circulaire (5) destinée aux aliments et est co-commandée par celle-ci, et en ce que l'alimentation de la solution médicamenteuse dans sa conduite d'alimentation circulaire (105) peut être enclenchée et déclenchée indépendamment de l'alimentation d'aliments.

2. Installation suivant la revendication 1, caractérisée en ce que la conduite d'alimentation circulaire (105) destinée à la solution médicamenteuse est raccordée chaque fois par une conduite de branchement (124) à un canal (125) dans le corps (126) de la valve de décharge (12), la lumière de sortie (127) de canal débouchant à l'intérieur de la surface de siège de la valve de décharge (12).

3. Installation suivant la revendication 2, caractérisée en ce qu'une forure (125) est prévue en tant que canal dans la nervure d'étanchéité (128) de la valve de décharge (12) se présentant sous la forme d'une valve à diaphragme et s'ouvre dans la zone du siège de valve au niveau de la face supérieure de la nervure d'étanchéité (128).

4. Installation suivant l'une quelconque des revendications 1 à 3, caractérisée en ce que le réservoir de mélange (101) pour la solution médicamenteuse est équipé d'un dispositif de pesée (115) et en ce qu'une pompe d'alimentation (107) est prévue comme générateur de pression de refoulement dans la conduite circulaire (105).

5. Installation suivant l'une quelconque des revendications 1 à 4, caractérisé en ce qu'il est prévu une pompe d'alimentation doseuse pour l'alimentation de la solution médicamenteuse dans sa conduite circulaire (105).

6. Installation suivant l'une quelconque des revendications 1 à 5, caractérisée en ce que l'on peut régir le débit de refoulement des pompes d'alimentation (7; 107) de manière indépendante dans les deux conduites circulaires (5; 105).

7. Installation suivant l'une quelconque des revendications 2 à 6, caractérisée en ce qu'il est prévu, dans la zone où le canal, ou la forure (125), débouche dans le corps de valve (126), un piston (131) obturant la lumière de sortie (127), piston qui peut être déplacé par la pression de refoulement de la solution médicamenteuse de sa position de repos abaissée vers une position de travail faisant saillie de la lumière de sortie (127) et présente un canal d'écoulement (132) pourvu d'un orifice de décharge latéral (133) pour la solution médicamenteuse.

8. Installation suivant la revendication 7, caractérisée en ce que le piston (131) a sensiblement une forme de chapeau et en ce que le bord inférieur (134) sert d'épaulement de butée dans une zone élargie (135) du canal ou de la forure (125),

9. Installation suivant la revendication 7 ou 8, caractérisée en ce que l'orifice de décharge latéral (133) du piston (131) est orienté vers la tubulure de décharge (130) du corps de valve (126).

10. Installation suivant l'une quelconque des revendications 7 à 9, caractérisé en ce que l'orifice de décharge (133) du piston (131) est situé, dans sa position de travail, à une certaine distance de la surface de siège de la valve.

11. Installation suivant l'une quelconque des revendications 7 à 10, caractérisée en ce que le piston (131) est sollicité par un ressort de rappel dans la direction de sa position de repos.
